# EUROPÄISCHE PATENTSCHRIFT

(11) **EP 4 090 620 B1**
(45) Veröffentlichungstag und Bekanntmachung des Hinweises auf die Patenterteilung: **20.12.2023**
(21) Anmeldenummer: 21700154.4
(22) Anmeldetag: 04.01.2021
(51) Int. Cl.: B66B 19/00

(54) **MOBILE TRANSPORTVORRICHTUNG UND VERFAHREN ZUM EINBRINGEN EINES MONTAGERAHMENS IN EINEN SCHACHT**
MOBILE TRANSPORT DEVICE AND METHOD FOR INSERTING A MOUNTING FRAME INTO A SHAFT
DISPOSITIF DE TRANSPORT MOBILE ET PROCÉDÉ D'INSERTION D'UN CADRE DE MONTAGE DANS UNE CAGE

(30) Priorität: 17.01.2020 EP 20152328
(43) Veröffentlichungstag der Anmeldung: 23.11.2022
(73) Patentinhaber: INVENTIO AG, 6052 Hergiswil (CH)
(72) Erfinder: ACHERMANN, Guido, 6206 Neuenkirch (CH); BECK, Roger, 6210 Sursee (CH); BIZZOZERO, Gabriele, 6038 Gisikon (CH); GAVRIC, Dragan, 6440 Brunnen (CH); HARMATH, Ralph, 6020 Emmenbrücke (CH); LANGHI, Nico, 8915 Hausen am Albis (CH); WEBER, Stefan, 5524 Niederwil AG (CH); WEIBEL, Andre, 6275 Ballwil (CH)
(74) Vertreter: Inventio AG
(86) Internationale Anmeldenummer: PCT/EP2021/050011
(87) Internationale Veröffentlichungsnummer: WO 2021/144154

(56) Entgegenhaltungen:
- JP-A- 2004 010 175
- JP-A- 2016 160 091

## Beschreibung

Die Erfindung betrifft eine mobile Transportvorrichtung zum Transportieren eines Montagerahmens und zum Einbringen des Montagerahmens in einen Schacht, insbesondere einen Aufzugschacht, mit den Merkmalen des Anspruchs 1 und ein Verfahren zum Einbringen des Montagerahmens in einen Schacht, insbesondere einen Aufzugschacht, mit den Merkmalen des Anspruchs 15.

Die JP 2016 160091 A beschreibt eine mobile Transportvorrichtung zum Transportieren eines Montagerahmens und zum Einbringen des Montagerahmens in einen Aufzugschacht. Die Transporteinrichtung verfügt über einen Grundrahmen und eine am Grundrahmen angeordneten Fixiereinrichtung zum Fixieren des Grundrahmens an einer Schachtöffnung und zum Verhindern eines Kippens der Transportvorrichtung.

Die WO 2017/016783 A1 beschreibt eine Montagevorrichtung mit einer mechatronischen Installationskomponente, die auf einem Montagerahmen angeordnet ist. Die Montagevorrichtung dient zur Ausführung von automatisierten Montageschritten, beispielsweise dem Bohren von Löchern in Schachtwände eines Aufzugschachts im Rahmen der Installation eines Aufzugs in dem genannten Aufzugschacht. Um Montageschritte in verschiedenen Höhen im Aufzugschacht ausführen zu können, ist die Montagevorrichtung an einem flexiblen Tragmittel aufgehängt, so dass sie von einer oben im Aufzugschacht angeordneten Verlagerungskomponente mittels des Tragmittels im Aufzugschacht verlagert werden kann. Bevor die Montagevorrichtung Montageschritte im Aufzugschacht ausführen kann, muss sie zum Aufzugschacht transportiert und in den Aufzugschacht über eine Schachtöffnung eingebracht werden. Die WO 2017/016783 A1 geht nicht darauf ein, wie die Montagevorrichtung transportiert und in den Aufzugschacht eingebracht werden soll.

Das Transportieren und Einbringen der Montagevorrichtung in den Schacht und damit auch des Montagerahmens ist auf Grund der notwendigen Abmasse der Montagevorrichtung und ihres Gewichts recht aufwändig. Erschwerend kommt hinzu, dass der Aufzugschacht an der Schachtöffnung, über die die Montagevorrichtung eingebracht werden soll, meist weder einen festen Boden noch eine temporäre Montageplattform aufweist, auf die die Montagevorrichtung abgestellt und die von einem Monteur betreten werden könnte.

Es ist damit insbesondere die Aufgabe der Erfindung, eine mobile Transportvorrichtung und ein Verfahren zum Einbringen des Montagerahmens in einen Schacht, insbesondere einen Aufzugschacht, vorzuschlagen, welche ein einfaches und insbesondere sicheres Einbringen des Montagerahmens in den Schacht ermöglicht. Erfindungsgemäss wird diese Aufgabe mit einer mobilen Transportvorrichtung mit den Merkmalen des Anspruchs 1 und einem Verfahren mit den Merkmalen des Anspruchs 15 gelöst.

Die erfindungsgemässe mobile Transportvorrichtung zum Transportieren eines Montagerahmens und zum Einbringen des Montagerahmens in einen Schacht, insbesondere einen Aufzugschacht, verfügt über einen Grundrahmen und einen Auflagerahmen, auf welchem sich der Montagerahmen von oben abstützen kann. Die Transportvorrichtung weist ausserdem eine am Grundrahmen angeordnete Fixiereinrichtung zum Fixieren des Grundrahmens an einer Schachtöffnung einer Schachtwand des Schachts und zum Verhindern eines Kippens der Transportvorrichtung auf. Der Auflagerahmen wird vom Grundrahmen getragen und ist gegenüber dem Grundrahmen so in horizontaler Richtung verschiebbar angeordnet, dass bei einem ausserhalb des Schachts angeordneten Grundrahmen der Auflagerahmen und damit auch der Montagerahmen von ausserhalb des Schachts durch die Schachtöffnung in den Schacht verschiebbar ist.

Die mobile Transportvorrichtung inklusive des Montagerahmens kann damit zur Schachtöffnung gebracht bzw. verlagert werden und mittels der Fixiervorrichtung ausserhalb des Schachts an der Schachtöffnung fixiert werden. Anschliessend kann der Auflagerahmen zusammen mit dem Montagerahmen gegenüber dem Grundrahmen horizontal verschoben und damit durch die Schachtöffnung in den Schacht geschoben werden. Auch während der genannten horizontalen Verschiebung werden der Auflagerahmen und der Montagerahmen vom Grundrahmen getragen, so dass der Montagerahmen nicht zusätzlich gehalten oder abgestützt werden muss. Der Montagerahmen kann insbesondere auch so auf dem Auflagerahmen angeordnet werden, dass ein Drehen oder Kippen des Montagerahmens vor dem Einbringen oder während des Einbringens in den Schacht nicht notwendig ist. Die horizontale Verschiebung des Auflagerahmens und des Montagerahmens erfordert dabei vergleichsweise wenig Kraft, da nur die Reibung zwischen Grundrahmen und Montagerahmen überwunden werden muss. Der Montagerahmen kann damit sehr einfach in den Schacht eingebracht werden. Es ist auch nicht notwendig, dass sich ein Monteur beim Einbringen des Montagerahmens in den Aufzugschacht oder direkt in die Schachtöffnung begibt. Das Einbringen des Montagerahmens ist damit auch besonders sicher.

Die im Folgenden beschriebenen Ausführungsbeispiele betreffen gleichermassen die mobile Transportvorrichtung und das Verfahren. In anderen Worten lassen sich im Folgenden beispielsweise unter Bezugnahme auf die mobile Transportvorrichtung genannten Merkmale auch als Verfahrensschritte implementieren, und umgekehrt.

Die Transportvorrichtung ist als eine mobile Transportvorrichtung ausgeführt. Darunter soll verstanden werden, dass die Transportvorrichtung als Ganzes, inklusive eines auf den Auflagerahmen aufgesetzten Montagerahmens mobil ist, also verlagert werden kann. Die Transportvorrichtung kann beispielsweise über Rollen verfügen, auf denen sie verschoben werden kann. Es ist ebenfalls möglich, dass die Transportvorrichtung beispielsweise mit einem Gabelstapler verlagert werden kann. Ausserdem kann die Transportvorrichtung auch an einem Seil aufgehängt und beispielsweise von einem Kran angehoben und verlagert werden.

Der Montagerahmen kann zum Halten einer mechatronischen Installationskomponente, beispielsweise in Form eines Industrieroboters dienen. Mittels der mechatronischen Installationskomponente können in einem im Schacht fixierten Zustand des Montagerahmens automatisiert Montageschritte im Schacht ausgeführt werden. Die mechatronische Installationskomponente kann beispielsweise entsprechend der automatisierten Installationskomponente der WO 2017/016780 A1 ausgeführt sein. Der Montagerahmen kann aber beispielsweise auch eine Installationsplattform tragen oder als eine Installationsplattform ausgeführt sein, von welcher aus ein Monteur Montageschritte von Hand oder der Hilfe von Werkzeugen im Schacht ausführen kann.

Unter einem Schacht soll hier ein von Schachtwänden begrenzter langgestreckter Raum verstanden werden. Der Schacht hat insbesondere einen hauptsächlich rechteckigen Querschnitt, wobei auch andere Querschnitte denkbar sind. Der Schacht verläuft insbesondere in hauptsächlich vertikaler Richtung. Der Schacht ist insbesondere in einem Gebäude angeordnet, wobei er beispielsweise auch in einer Brücke, einem Pfeiler oder auf einem Schiff angeordnet sein kann. Die Schachtwände bestehen insbesondere aus mit Armierungen verstärktem Beton. Sie können aber auch beispielsweise aus Metall ausgeführt sein. Der Schacht dient insbesondere als ein Aufzugschacht einer Aufzuganlage, in dem beim Betrieb der Aufzuganlage eine Kabine zum Transportieren von Personen und/oder Gegenständen in Verlagerungsrichtung verlagert wird. Der Schacht kann auch anderen Zwecken dienen, beispielsweise kann er als ein Lüftungsschacht oder zur Aufnahme von Rohren, Elektrokabel oder ähnlichem dienen.

Der Schacht weist eine Schachtöffnung auf, über die der Schacht von der Seite, also in horizontaler Richtung zugänglich ist. Die Schachtöffnung ist damit in einer der Schachtwände des Schachts angeordnet. Wenn der Schacht als ein Aufzugschacht ausgeführt ist, wird während der Montage eines Aufzugs in den Aufzugschacht in die Schachtöffnung eine Schachttür eingebaut, durch die im späteren Betrieb des Aufzugs Passagiere eine Kabine des Aufzugs betreten und verlassen können. Vor der Schachtöffnung, also ausserhalb des Schachts ist insbesondere ein Boden angeordnet, auf dem die Transportvorrichtung stehen kann. Wenn der Schacht als ein Aufzugschacht ausgeführt ist, ist der genannte Boden der Boden des Stockwerks, das über die entsprechende Schachtöffnung und damit Schachttür zugänglich ist.

Nach dem Einbringen in den Schacht, soll der Montagerahmen innerhalb des Schachts in Verlagerungsrichtung verlagert und damit an verschiedene Stellen, insbesondere in verschiedenen Höhen innerhalb des Schachts positioniert werden können. Dazu wird der Montagerahmen vor oder nach dem Einbringen in den Schacht mit einem Tragmittel, beispielsweise in Form eines Seils, einer Kette oder eines Riemens an einer Verlagerungskomponente, insbesondere in Form einer Winde verbunden. Das Tragmittel kann von der Winde auf oder abgewickelt werden und der Montagerahmen damit im Schacht verlagert werden. Nach dem Einbringen in den Schacht kann der Montagerahmen damit vom Auflagerahmen nach oben abgehoben werden.

Der Grundrahmen weist insbesondere eine hauptsächlich quaderförmige Grundform auf. Eine Grundstruktur des Grundrahmens ist insbesondere aus Metallprofilen aufgebaut, welche insbesondere einen rechteckigen Querschnitt aufweisen. An der Grundstruktur können weitere Bauteile angeordnet sein.

Der Auflagerahmen weist insbesondere ebenfalls eine hauptsächlich quaderförmige Grundform und damit einen hauptsächlich rechteckigen Querschnitt auf. Dabei ist er insbesondere nicht so hoch wie der Grundrahmen. Der Auflagerahmen bildet damit eine nach oben orientierte Auflagefläche aus, auf die der Montagerahmen aufgesetzt werden kann, so dass er sich von oben auf der Auflagefläche und damit auf dem Auflagerahmen abstützt. Der Auflagerahmen besteht beispielsweise hauptsächlich aus miteinander verschweissten rechteckigen Metallprofilen. Der Auflagerahmen wird vom Grundrahmen getragen, so dass er sich von oben auf dem Grundrahmen abstützt. Insbesondere stützt er sich ausschliesslich auf dem Grundrahmen ab.

Mit der am Grundrahmen angeordneten Fixiereinrichtung kann der Grundrahmen und damit die Transportvorrichtung ausserhalb des Schachts an der genannten Schachtöffnung fixiert werden. Unter einer Fixierung an der Schachtöffnung soll verstanden werden, dass sich die Fixiereinrichtung an den die Schachtöffnung ausbildenden Teilen des Schachts so abstützt, dass sie Kräfte in horizontaler Richtung, insbesondere senkrecht zur Schachtöffnung und Drehmomente, die zu einem Kippen der Transportvorrichtung führen könnten, abstützen kann. Unter den die Schachtöffnung ausbildenden Teilen des Schachts soll dabei insbesondere die Schachtwand (innerhalb des Schachts und ausserhalb des Schachts), aber auch ein Boden oder eine Decke vor der Schachtöffnung verstanden werden.

Um den Montagerahmen in den Schacht einzubringen, ihn also von ausserhalb des Schachts in den Schacht zu bringen, wird die Transportvorrichtung inklusive Montagerahmen an einer geeigneten Position vor der Schachtöffnung, also ausserhalb des Schachts angeordnet. Anschliessend wird der Grundrahmen und damit die Transportvorrichtung mittels der Fixiereinrichtung an der Schachtöffnung fixiert. Anschliessend kann der Auflagerahmen in horizontaler Richtung in Richtung Schacht gegenüber dem Grundrahmen verschoben werden, dass der Auflagerahmen und damit der Montagerahmen durch die Schachtöffnung in den Schacht verschoben wird. Der Auflageramen kann beispielsweise zwischen 150 und 200 cm gegenüber dem Grundrahmen verschoben werden. Die Verschiebung kann dabei nicht ausschliesslich in horizontaler Richtung verlaufen, sondern kann auch eine vertikale Komponente aufweisen. Sie kann also auch schräg oder geneigt verlaufen.

Vor dem Verschieben des Auflagerahmens gegenüber dem Grundrahmen ist der Auflagerahmen hauptsächlich, insbesondere vollständig oberhalb des Grundrahmens angeordnet ist. Eine aus der Gewichtskraft des Auflagerahmens und eines auf dem Auflagerahmen aufgesetzten Montagerahmens resultierende Kraft wirkt damit innerhalb des Grundrahmens. Das Verschieben des Auflagerahmens in Richtung Schacht bewirkt, dass der Auflagerahmen den Grundrahmen in horizontaler Richtung überragt und die Wirkrichtung der genannten resultierenden Kraft ebenfalls horizontal in Richtung Schacht verschoben wird. Dies führt letztendlich dazu, dass die resultierende Kraft ausserhalb des Grundrahmens wirkt, was zu einem Kippmoment auf den Grundrahmen führt. Dieses Kippmoment wird von der Fixiereinrichtung abgestützt und damit ein Kippen des Grundrahmens und damit der Transportvorrichtung verhindert. Es ist damit nicht ausreichend, wenn der Grundrahmen lediglich gegen eine horizontale Verschiebung gesichert wird.

Die Transportvorrichtung kann auch zum Entfernen des Montagerahmens aus dem Schacht verwendet werden. Sie wird dazu analog zum Einbringen des Montagerahmens in den Schacht an der Schachtöffnung angeordnet und fixiert. Anschliessend wird der Auflagerahmen ohne einen aufgesetzten Montagerahmen durch die Schachtöffnung in den Schacht verschoben. Anschliessend kann der Montagerahmen mit der Verlagerungskomponente auf dem Auflagerahmen aufgesetzt werden. Anschliessend wird der Auflagerahmen horizontal aus dem Schacht in Richtung Grundrahmen und damit von innerhalb des Schachts nach ausserhalb des Schachts verschoben. Der Montagerahmen kann entweder innerhalb oder ausserhalb des Schachts vom Tragmittel gelöst werden.

In Ausgestaltung der Erfindung ist der Auflagerahmen über einen Teleskopschienenauszug, insbesondere zwei parallel nebeneinander angeordnete Teleskopschienenauszüge am Grundrahmen angeordnet. Damit wird ein besonders einfacher Aufbau der Transportvorrichtung ermöglicht. Ausserdem ermöglicht die Verwendung von Teleskopschienenauszügen eine leichtgängige horizontale Verlagerung des Auflagerahmens gegenüber dem Grundrahmen und damit ein besonders einfaches Einbringen der Montageplattform in den Schacht. Da der Auflagerahmen mit aufgesetztem Montagerahmen ein recht hohes Gewicht aufweist, sind die verwendeten Teleskopschienenauszüge als so genannte Schwerlast-Teleskopschienenauszüge ausgeführt.

Ein Teleskopschienenauszug besteht aus mindestens zwei Führungsschienen, deren Profile ineinander laufen und gegeneinander verschoben werden können. Eine erste Führungsschiene, insbesondere eine äussere Führungsschiene ist mit dem Grundrahmen und eine zweite Führungsschiene, insbesondere eine innere Führungsschiene ist mit dem Auflagerahmen verbunden. Die Führungsschienen können beispielsweise direkt oder über einen Zwischenhalter mit dem Grundrahmen bzw. dem Auflagerahmen verbunden, insbesondere verschraubt sein.

In Ausgestaltung der Erfindung weisen der Grundrahmen und der Auflagerahmen jeweils einen Anschlag auf, welche so ausgeführt und angeordnet sind, dass sie ein Verschieben des Auflagerahmens gegenüber dem Grundrahmen begrenzen. Sie können auch jeweils mehr als einen Anschlag, insbesondere jeweils zwei Anschläge aufweisen. Damit kann sicher verhindert werden, dass der Auflagerahmen zu weit gegenüber dem Grundrahmen verschoben wird und er nicht mehr vom Grundrahmen gehalten werden kann. Dies gewährleistet eine besonders sichere Transportvorrichtung.

Die Anschläge von Grundrahmen und Auflagerahmen kommen in Kontakt zueinander, wenn eine maximale horizontale Verschiebung des Auflagerahmens gegenüber dem Grundrahmen erreicht ist und verhindern damit eine weitere Verschiebung. Die Anschläge können beispielsweise als Metallplättchen ausgeführt sein, die an den Grundrahmen bzw. den Auflagerahmen angeschweisst oder angeschraubt sein können.

In Ausgestaltung der Erfindung ist der Auflagerahmen mittels eines Spindelantriebs gegenüber dem Grundrahmen verschiebbar. Damit wird eine besonders einfache Verschiebung des Auflagerahmens gegenüber dem Grundrahmen und somit ein besonders einfaches Einbringen des Montagerahmens in den Schacht ermöglicht. Der Spindelantrieb kann beispielsweise mittels einer Kurbel von Hand betätigt werden. Es ist auch möglich, dass eine Spindel des Spindelantriebs über eine Ankopplungsmöglichkeit an eine Handbohrmaschine verfügt und der Spindelantrieb mittels einer angekoppelten Handbohrmaschine betätigt wird. Ausserdem ist es möglich, dass ein Antrieb, beispielsweise ein Elektromotor zur Betätigung des Spindelantriebs fest an der Transportvorrichtung angeordnet ist.

Die Spindel des Spindelantriebs ist insbesondere rotierbar und in horizontaler Richtung nicht verschiebbar am Grundrahmen gelagert und an einem Ende mit dem Auflagerahmen so verbunden, dass der Auflagerahmen bei einer Rotation der Spindel gegenüber der Spindel horizontal verschoben wird. Bei einer Rotation der Spindel wird damit der Auflagerahmen gegenüber dem Grundrahmen verschoben.

In Ausgestaltung der Erfindung ist der Auflagerahmen gegenüber der Horizontalen geneigt angeordnet. Die genannte Neigung ist dann gegeben, wenn der Transportrahmen auf einem zumindest nahezu horizontal verlaufenden Boden steht. Der Auflagerahmen ist insbesondere so geneigt angeordnet, dass er bei einer Anordnung der Transportvorrichtung an einer Schachtöffnung des Schachts ein Gefälle in Richtung Schachtöffnung und damit in Richtung Schacht aufweist. Damit kann sich beim Einbringen des Montagerahmens in den Schacht der Auflagerahmen samt Montagerahmen aufgrund seiner Gewichtskraft ohne die Notwendigkeit einer weiteren Krafteinleitung selbsttätig gegenüber dem Grundrahmen durch die Schachtöffnung in den Schacht verschieben. Damit wird das Einbringen des Montagerahmens in den Schacht besonders einfach.

Die Neigung kann beispielsweise zwischen 5 und 15 °, insbesondere ca. 10 ° betragen. Am Grundrahmen ist insbesondere eine Seilwinde angeordnet, mittels welcher der Auflagerahmen wieder aus dem Schacht in Richtung Grundrahmen gezogen werden kann. Das Seil der Seilwinde ist dazu mit dem Auflagerahmen verbunden. Mittels der Seilwinde und des Seils kann auch das selbsttätige Verschieben des Auflagerahmens gegenüber dem Grundrahmen beim Einbringen des Montagerahmens in den Schacht kontrolliert, also das selbsttätige Verschieben gebremst oder unterbunden werden. Zusätzlich zur Seilwinde kann eine Sicherung des Auflagerahmens gegenüber dem Grundrahmen vorgesehen sein, die ein ungewolltes Verschieben des Auflagerahmens gegenüber dem Grundrahmen verhindert. Die Sicherung kann beispielsweise einen Bolzen aufweisen, der in korrespondierende Ausnehmungen in Auflagerahmen und Grundrahmen gesteckt wird.

Wenn die Transportvorrichtung eine oben beschriebenen Spindelantrieb aufweist, ist der Auflagerahmen insbesondere horizontal, also nicht geneigt angeordnet. Es ist aber auch eine Kombination aus Spindelantrieb und geneigter Anordnung des Auflagerahmens denkbar.

In Ausgestaltung der Erfindung weist die Fixiereinrichtung ein primäres Fixierelement zum Abstützen an einer Aussenseite der die Schachtöffnung aufweisenden Schachtwand auf. Damit kann eine besonders sichere Fixierung ermöglicht und ein Kippen der Transportvorrichtung beim Verschieben des Auflagerahmens gegenüber dem Grundrahmen besonders sicher verhindert werden.

Unter der Aussenseite einer Schachtwand soll hier die vom Schacht gesehen nach aussen orientierte Seite einer Schachtwand verstanden werden. Dementsprechend soll unter einer Innenseite einer Schachtwand hier die vom Schacht gesehen nach innen orientierte Seite einer Schachtwand verstanden werden.

Die Fixiereinrichtung weist insbesondere zwei primäre Fixierelemente auf, die bezüglich der Schachtöffnung jeweils seitlich am Grundrahmen angeordnet sind. Das primäre Fixierelement oder die primären Fixierelemente erstrecken sich beim Fixieren insbesondere in vertikaler Richtung so weit nach oben, dass sie über die Türöffnung hinaus ragen und sich damit oberhalb der Türöffnung an der Aussenseite der Schachtwand abstützen können. Beim Verschieben des Auflagerahmens in den Schacht besteht insbesondere die Gefahr, dass der Grundrahmen und damit die Transportvorrichtung in Richtung Schacht kippt. Dies kann mit einer Abstützung an der Aussenseite der die Schachtöffnung aufweisenden Schachtwand oberhalb der Schachtöffnung sicher verhindert werden.

Das primäre Fixierelement weist insbesondere eine Spindel auf, die beim Fixieren hauptsächlich horizontal in Richtung Schachtwand verläuft. Die Spindel ist im primären Fixierelement rotierbar und verschiebbar gelagert, so dass sie durch eine entsprechende Rotation, beispielsweise mittels einer Handkurbel, in Richtung Schachtwand bzw. von der Schachtwand weg verlagert werden kann. Die Spindel wird insbesondere so weit in Richtung Schachtwand verlagert, dass sie bereits vor dem Verschieben des Auflagerahmens in Richtung Schacht an der Aussenseite der Schachtwand anliegt.

In Ausgestaltung der Erfindung weist das primäre Fixierelement einen Fixierarm auf, welcher in einer Fixierposition und einer Verlagerungsposition an der Transportvorrichtung angeordnet werden kann. In seiner Fixierposition ermöglicht der Fixierarm eine Fixierung des Grundrahmens an der Schachtöffnung und in seiner Verlagerungsposition eine Verlagerung der Transportvorrichtung. In der Verlagerungsposition kann der Fixierarm damit zusammen mit der Transportvorrichtung verlagert werden und muss nicht separat transportiert werden. Dies ermöglicht eine besonders effektive Verwendung der Transportvorrichtung.

Der Fixierarm ist insbesondere in seiner Länge veränderbar, so dass er an den jeweiligen Schacht, insbesondere an die Höhe der Schachtöffnung angepasst werden kann. Er ist insbesondere mehrteilig, speziell zweiteilig ausgeführt, wobei die beiden Teile insbesondere ineinander verschiebbar und voneinander trennbar ausgeführt und in einer gewünschten Position zueinander, beispielsweise mit einem Bolzen fixierbar sind. Die Transportvorrichtung ist insbesondere so ausgeführt, dass alle Teile des Fixierarms in einer Verlagerungsposition an ihr angeordnet werden können.

In Ausgestaltung der Erfindung ist zumindest ein Teil des Fixierarms um eine Schwenkachse schwenkbar am Grundrahmen angeordnet und durch ein Verschwenken um die genannte Schwenkachse von der Fixierposition in die Verlagerungsposition und umgekehrt bringbar. Damit wird eine besonders einfache Bedienung der Transportvorrichtung ermöglicht und ausserdem sichergestellt, dass das schwenkbar und damit fest mit dem Grundrahmen verbundene Teil des Fixierarms nicht verloren gehen kann. Der Fixierarm ist in diesem Fall insbesondere zweiteilig ausgeführt.

In Ausgestaltung der Erfindung weist die Fixiereinrichtung ein sekundäres Fixierelement zum Abstützen an einer Innenseite der die Schachtöffnung aufweisenden Schachtwand auf. Damit kann eine besonders sichere Fixierung ermöglicht und ein Kippen der Transportvorrichtung beim Verschieben des Auflagerahmens gegenüber dem Grundrahmen besonders sicher verhindert werden.

Die Fixiereinrichtung weist insbesondere zwei sekundäre Fixierelemente auf. Das sekundäre Fixierelement oder die sekundären Fixierelemente erstrecken sich beim Fixieren insbesondere in vertikaler Richtung so weit nach unten, dass sie über die Türöffnung hinaus ragen und sich damit unterhalb der Türöffnung an der Innenseite der Schachtwand abstützen können. Beim Verschieben des Auflagerahmens in den Schacht besteht insbesondere die Gefahr, dass der Grundrahmen und damit die Transportvorrichtung in Richtung Schacht kippt. Dies kann mit einer Abstützung an der Innenseite der die Schachtöffnung aufweisenden Schachtwand unterhalb der Schachtöffnung sicher verhindert werden. Das sekundäre Fixierelement oder die sekundären Fixierelemente verhindern ausserdem, dass sich der Grundrahmen und damit die Transportvorrichtung in horizontaler Richtung von der Schachtöffnung weg bewegt.

Die Fixiereinrichtung kann auch auf andere Weise ausgeführt sein. Es ist beispielsweise denkbar, dass sich die Fixiereinrichtung zwischen dem Boden und einer Decke vor der Schachtöffnung verstemmt.

In Ausgestaltung der Erfindung sind am Grundrahmen Rollen angeordnet, mittels welchen sich der Grundrahmen auf einem Boden unterhalb des Grundrahmens abstützt und welche auf dem Boden abrollen können. Damit kann die Transportvorrichtung besonders einfach verlagert werden.

Die Transportvorrichtung weist insbesondere vier Rollen auf. Die Rollen sind insbesondere um eine senkrecht stehende Achse verschwenkbar am Grundrahmen angeordnet, wobei sie insbesondere in verschiedenen Richtungen festgestellt werden können.

In Ausgestaltung der Erfindung ist am Grundrahmen zusätzlich zu den genannten Rollen eine Abstützvorrichtung angeordnet, mittels welcher sich der Grundrahmen an einem Boden vor der Schachtöffnung abstützen kann. Damit können die Rollen beim Einbringen des Montagerahmens in den Schacht entlastet werden. Die Abstützvorrichtung verfügt insbesondere über zwei vertikal ausgerichtete Spindeln, die drehbar und verschiebbar im Grundrahmen gelagert sind. Durch eine entsprechende Drehung können sie so weit nach unten aus dem Grundrahmen herausgedreht werden, dass sie sich auf dem Boden vor der Schachtöffnung abstützen und den Grundrahmen so weit anheben, dass zumindest die beiden in Richtung Schachtöffnung angeordneten Räder nicht mehr belastet werden oder sogar vom Boden abheben.

In Ausgestaltung der Erfindung weist der Grundrahmen eine Kopplungsvorrichtung auf, welche so ausgeführt und angeordnet ist, dass eine Kopplung mit einer Antriebsvorrichtung zum Verlagern der Transportvorrichtung herstellbar ist. Damit kann die Transportvorrichtung besonders einfach verlagert werden. Dies ermöglicht eine besonders einfache Benutzung der Transportvorrichtung. Die Kopplungsvorrichtung kann beispielsweise als ein Metallprofil ausgeführt sein, in das eine Antriebsvorrichtung eingreifen kann. Die Antriebsvorrichtung kann beispielsweise wie eine Antriebsvorrichtung gemäss der EP 1710146A2 ausgeführt sein.

Statt einer Kopplungsvorrichtung für eine Antriebsvorrichtung kann die Transportvorrichtung auch angetriebene Rollen oder eine Antriebsmaschine in Form eines Elektromotors aufweisen.

In Ausgestaltung der Erfindung weist der Auflagerahmen eine Zentriervorrichtung auf, mittels welcher der Montagerahmen beim Aufsetzen auf den Auflagerahmen in eine vorgegebene Aufsetzposition geführt wird. Damit wird einerseits ermöglicht, dass der Montagerahmen sicher in der dafür vorgesehenen Position auf dem Auflagerahmen aufgesetzt wird und zum anderen wird das Aufsetzen erleichtert.

Der Auflagerahmen weist insbesondere mehrere Zentriervorrichtungen, speziell vier Zentriervorrichtungen auf. Die Zentriervorrichtungen weisen insbesondere Einführschrägen auf, die mit entsprechenden Schrägen an Fortsätzen des Montagerahmens zusammenwirken. Beim Aufsetzen des Montagerahmens auf den Auflagerahmen können die Schrägen aufeinander abgleiten und den Montagerahmen damit in die vorgegebene Aufsetzposition bringen.

In Ausgestaltung der Erfindung weist die Zentriervorrichtung eine Sicherungsvorrichtung auf, mittels welcher ein auf den Auflagerahmen aufgesetzter Montagerahmen am Aufnahmerahmen gesichert werden kann. Damit kann verhindert werden, dass sich der Montagerahmen unbeabsichtigt vom Auflagerahmen und damit von der Transportvorrichtung löst.

Die Sicherungsvorrichtung kann beispielsweise eine Ausnehmung, beispielsweise in Form eines Durchgangslochs aufweisen, welche in der vorgegebenen Aufsetzposition des Montagerahmens mit einer korrespondierenden Ausnehmung, beispielsweise in Form eines Durchgangslochs des Montagerahmens ausgerichtet ist. Zum Sichern des Montagerahmens am Auflagerahmen kann beispielsweise ein Sicherungsstift durch die beiden Ausnehmungen gesteckt werden, womit eine formschlüssige Verbindung zwischen dem Montagerahmen und dem Auflagerahmen hergestellt ist. Es ist auch möglich, dass die Sicherungsvorrichtung nicht an der Zentriervorrichtung, sondern an einer anderen Stelle angeordnet ist.

Die Transportvorrichtung weist insbesondere mindestens eine Öse auf, mittels welchem die Transportvorrichtung aufgehängt werden kann. Damit kann die Transportvorrichtung besonders einfach, beispielsweise mittels eines Krans verlagert werden.

Die Transportvorrichtung weist insbesondere mehr als eine, speziell vier Ösen auf. Die Öse bzw. die Ösen sind insbesondere am Auflagerahmen angeordnet, insbesondere angeschweisst.

Die vorgenannte Aufgabe wird auch von einem Verfahren zum Einbringen des Montagerahmens in einen Schacht, insbesondere einen Aufzugschacht, gelöst. Der Montagerahmen ist dabei auf einen Auflagerahmen einer mobilen Transportvorrichtung aufgesetzt und stützt sich von oben auf dem Auflagerahmen ab. Der Auflagerahmen wird von einem Grundrahmen der Transportvorrichtung getragen. Das erfindungsgemässe Verfahren weist wenigstens folgende Schritte auf
- Fixieren des Grundrahmens und damit der Transportvorrichtung mittels einer am Grundrahmen angeordneten Fixiereinrichtung an der Schachtöffnung ausserhalb des Schachts, womit ein Kippen der Transportvorrichtung verhindert wird und
- Verschieben des gegenüber dem Grundrahmen in horizontaler Richtung verschiebbar angeordneten Auflagerahmen von ausserhalb des Schachts durch die Schachtöffnung in den Schacht, womit der Montagerahmen von ausserhalb des Schachts durch die Schachtöffnung in den Schacht eingebracht wird.

Das Verfahren hat die im Zusammenhang mit der mobilen Transportvorrichtung genannten Vorteile.

Die Schritte werden insbesondere in der angegebenen Reihenfolge ausgeführt, es sind aber auch Abweichungen von dieser Reihenfolge denkbar.

Ein Aufsetzen, insbesondere das erste Aufsetzen des Montagerahmens auf den Auflagerahmen der mobilen Transportvorrichtung kann ausserhalb des den Schacht aufweisenden Gebäudes erfolgen. Nach dem ersten Aufsetzen wird der Montagerahmen insbesondere nach Abschluss von Montagearbeiten in einem Schacht wieder auf den Auflagerahmen der mobilen Transportvorrichtung aufgesetzt, zu einem anderen Schacht verlagert und in den anderen Schacht eingebracht.

Nach dem Aufsetzen wird die inklusive Montagerahmen zu einer Schachtöffnung des Schachts verlagert. Diese Verlagerung kann innerhalb eines Gebäudes oder zwischen Gebäuden erfolgen. Für die Verlagerung können unterschiedlichste Hilfsmittel, wie beispielsweise eine Antriebsvorrichtung, ein Gabelstapler, ein Kran oder ein Lastwagen verwendet werden. Die Transportvorrichtung kann auch von einem oder mehreren Monteuren von Hand verschoben und damit verlagert werden.

Vor oder nach dem Einbringen in den Schacht wird der Montagerahmen insbesondere mit einem im Schacht verlaufenden Tragmittel verbunden. Damit kann der Montagerahmen nach dem Einbringen in den Schacht von einer oben im Schacht angeordneten Verlagerungskomponente, beispielsweise in Form einer Winde mittels des Tragmittels vom Auflagerahmen nach oben abgehoben werden und im Schacht verlagert werden.

Nach dem Anhängen und Abheben des Montagerahmens wird der Auflagerahmen insbesondere wieder aus dem Schacht entfernt. Dazu wird er horizontal gegenüber dem Grundrahmen von innerhalb des Schachts nach ausserhalb des Schachts, also in Richtung Grundrahmen verschoben. Es wird also die beim Einbringen des Montagerahmens in den Schacht ausgeführte Verschiebung in umgekehrter Richtung ausgeführt.

Anschliessend kann die Fixierung an der Schachtöffnung gelöst und die Transportvorrichtung von der Schachtöffnung weg verlagert werden. Damit stört die Transportvorrichtung nicht bei anschliessenden Montagearbeiten im Schacht.

Nach Abschluss der Montagearbeiten im Schacht wird der Montagerahmen wie bereits oben beschrieben mit Hilfe der mobilen Transportvorrichtung wieder aus dem Schacht entfernt.

Es wird darauf hingewiesen, dass einige der möglichen Merkmale und Vorteile der Erfindung hierin mit Bezug auf unterschiedliche Ausführungsformen der erfindungsgemässen Transportvorrichtung einerseits und des erfindungsgemässen Verfahrens andererseits beschrieben sind. Ein Fachmann erkennt, dass die Merkmale in geeigneter Weise kombiniert, angepasst, übertragen oder ausgetauscht werden können, um zu weiteren Ausführungsformen der Erfindung zu gelangen.

Weitere Vorteile, Merkmale und Einzelheiten der Erfindung ergeben sich anhand der nachfolgenden Beschreibung von Ausführungsbeispielen sowie anhand der Zeichnungen, in welchen gleiche oder funktionsgleiche Elemente mit identischen Bezugszeichen versehen sind. Die Zeichnungen sind lediglich schematisch und nicht massstabsgetreu.

Dabei zeigen:
- Fig. 1: eine vor einer Schachtöffnung eines Schachts angeordnete mobile Transportvorrichtung mit einem aufgesetzten Montagerahmen,
- Fig. 2: die Transportvorrichtung aus Fig. 1 in einem an der Schachtöffnung fixierten Zustand und in den Schacht eingeschobenen Montagerahmen und
- Fig. 3: eine vor einer Schachtöffnung eines Schachts angeordnete mobile Transportvorrichtung in einer alternativen Ausführung mit einem aufgesetzten Montagerahmen.

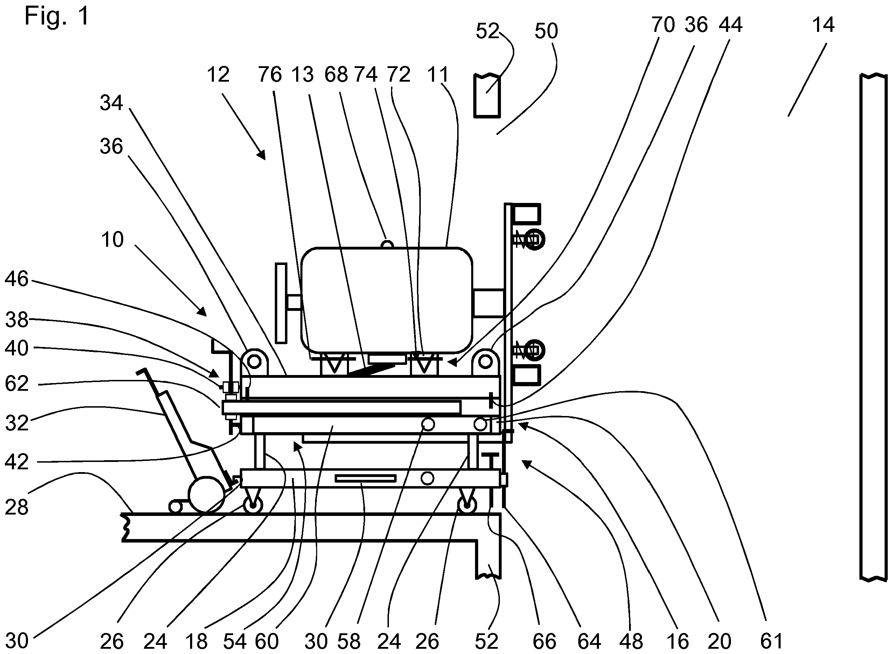

Gemäss Fig. 1 verfügt eine mobile Transportvorrichtung 10 zum Transportieren eines Montagerahmens 11 einer Montagevorrichtung 12 und zum Einbringen des Montagerahmens 11 und der Montagevorrichtung 12 in einen Schacht in Form eines Aufzugschachts 14 über einen Grundrahmen 16. Die Montagevorrichtung 12 verfügt ausserdem über eine mechatronische Installationskomponente in Form eines Industrieroboters 13, der nach unten hängend am Montagerahmen 11 angeordnet ist.

Der Grundrahmen 16 weist einen unteren Rahmen 18 und einen oberen Rahmen 20 auf.

Die beiden Rahmen 18, 20 weisen einen identischen rechteckigen Querschnitt auf und bestehen aus rechteckigen Metallprofilen. Die beiden Rahmen 18, 20 sind über vier vertikal verlaufende, ebenfalls aus Metallprofilen bestehenden, gleich langen Holme 24, die jeweils im Bereich der Ecken der Rahmen 18, 20 angeordnet sind, miteinander verbunden. Die beiden Rahmen 18, 20 des Grundrahmens 16 sind damit parallel zueinander angeordnet. Der Grundrahmen 16 weist damit eine quaderförmige Grundform auf. Die beiden Rahmen 18, 20 und die Holme 24 bilden damit eine Grundstruktur des Grundrahmens 16.

An der Unterseite des unteren Rahmens 18 des Grundrahmens 16 sind vier Rollen 26 angeordnet, über die sich der Grundrahmen 16 und damit die Transportvorrichtung 10 auf einem Boden 28 unterhalb des Grundrahmens 16 abstützt. Die Rollen 26 sind um jeweils eine senkrecht stehende Achse verschwenkbar am unteren Rahmen 18 angeordnet und können in verschiedenen Richtungen festgestellt werden. Damit kann die Transportvorrichtung 10 auf dem Boden 28 verschoben werden, wobei die Rollen 26 auf dem Boden 28 abrollen. An insgesamt drei Seiten des unteren Rahmens 18 des Grundrahmens 16 sind Kopplungsvorrichtungen 30 in Form von nach unten offenen Metallprofilen angeordnet, in die eine angetriebene Transportvorrichtung 32 eingreifen und so eine Antriebskraft auf die Transportvorrichtung 10 aufbringen kann. Die Antriebsvorrichtung 32 kann beispielsweise wie eine Antriebsvorrichtung gemäss der EP1710146A2 ausgeführt sein.

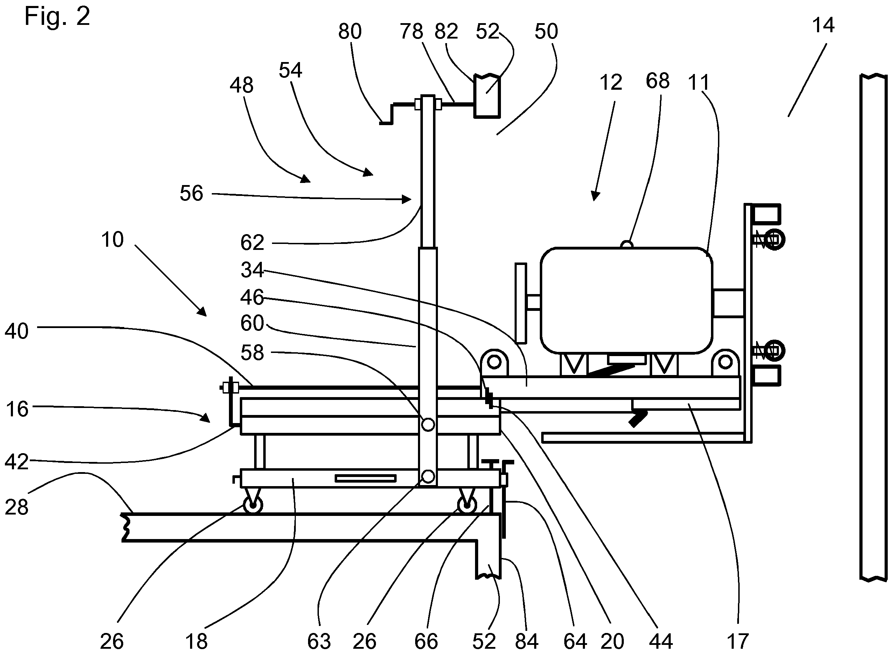

Der obere Rahmen 20 des Grundrahmens 16 trägt einen Auflagerahmen 34, auf dem sich der Montagerahmen 11 der Montagevorrichtung 12 von oben abstützt. Der Auflagerahmen 34 ist damit horizontal und damit nicht gegenüber der Horizontalen geneigt angeordnet. Er weist ebenfalls einen rechteckigen Querschnitt auf und besteht ebenfalls aus einem rechteckigen Metallprofil. Der Querschnitt des Auflagerahmens 34 ist dabei identisch mit den Querschnitten der beiden Rahmen 18, 20 des Grundrahmens 16. Am Auflagerahmen 34 ist im Bereich seiner vier Ecken jeweils eine Öse 36 angeordnet, mittels welchen die Transportvorrichtung 10 an einem geeigneten, nicht dargestellten Seil aufgehängt und verlagert werden kann. Der Auflagerahmen 34 ist über zwei parallel zueinander angeordnete, in der Fig. 1 nicht sichtbare Teleskopschienenauszüge (17 in Fig. 2) mit dem oberen Rahmen 20 des Grundrahmens 16 verbunden. Damit kann der Auflagerahmen 34 und die Montagevorrichtung 12 in Richtung Aufzugschacht 14 horizontal gegenüber dem Grundrahmen 16 verschoben werden.

Das Verschieben des Auflagerahmens 34 gegenüber dem Grundrahmen 16 erfolgt mittels eines Spindelantriebs 38. Der Spindelantrieb 38 verfügt über eine Spindel 40, die in einem L-förmigen Anbauteils 42 am oberen Rahmen 20 des Grundrahmens 16 rotierbar und in horizontaler Richtung nicht verschiebbar gelagert ist. Die Spindel 40 ist ausserdem mit dem Auflagerahmen 34 so verbunden, dass der Auflagerahmen 34 bei einer Rotation der Spindel 40 gegenüber der Spindel 40 horizontal verschoben wird. Bei einer Rotation der Spindel 40 wird damit der Auflagerahmen 34 gegenüber dem Grundrahmen 16 verschoben. Die Spindel 40 kann mit einer nicht dargestellten Handkurbel gedreht und damit rotiert werden. Es ist auch möglich, dass eine nicht dargestellte Handbohrmaschine an die Spindel 40 angekoppelt wird und sie damit gedreht bzw. rotiert wird.

Am oberen Rahmen 20 des Grundrahmens 16 ist an seinem in Richtung Aufzugschacht 14 orientierten Ende ein erster Anschlag 44 angeordnet. Dieser erste Anschlag 44 begrenzt zusammen mit einem zweiten Anschlag 46, welcher an einem dem Aufzugschacht abgewandten Ende des Auflagerahmens 34 angeordneten zweiten Anschlag 46 die horizontale Verschiebung des Auflagerahmens 34 gegenüber dem Grundrahmen 16. Die beiden Anschläge 44, 46 kommen bei Erreichen einer maximalen Verschiebung in Kontakt zueinander und verhindern so eine weitere Verschiebung des Auflagerahmens 34 gegenüber dem Grundrahmen 16 in Richtung Aufzugschacht 14. Diese Situation ist in Fig. 2 dargestellt.

Am Grundrahmen 16 ist ausserdem eine Fixiereinrichtung 48 zum Fixieren des Grundrahmens 16 an einer Schachtöffnung 50 einer Schachtwand 52 des Aufzugschachts 14 und zum Verhindern eines Kippens der Transportvorrichtung 10 angeordnet. In Fig. 1 ist die Fixiereinrichtung 48 in ihrer Transportposition dargestellt, in der sie eine Verlagerung der Transportvorrichtung 10 ermöglicht. Die Fixiereinrichtung 48 verfügt über zwei seitlich am Grundrahmen 16 angeordnete primäre Fixierelemente 54, wobei in den Fig. 1 und 2 nur ein primäres Fixierelement 54 zu sehen ist. Das primäre Fixierelement 54 weist einen zweiteiligen Fixierarm (56 in Fig. 2) auf, welcher aus einem unteren, um eine fest am oberen Rahmen 20 des Grundrahmens 16 angeordnete Schwenkachse 58 schwenkbaren Armteil 60 und einem oberen Armteil 62 besteht. Der schwenkbare Armteil 60 kann mit einem Bolzen 61 gegenüber dem oberen Rahmen 20 des Grundrahmens 16 gesichert werden. Der obere Armteil 62 kann in den unteren Armteil 60 eingesteckt und in verschiedenen Positionen mit einem nicht dargestellten Bolzen gesichert werden. Damit ist die Länge des Fixierarms 56 einstellbar und kann an die Höhe der Schachtöffnung 50 angepasst werden. Der obere Armteil 62 ist in seiner Transportposition mittels einer nicht dargestellten Halterung am oberen Rahmen 20 des Grundrahmens 16 befestigt.

Die Fixiereinrichtung 48 verfügt ausserdem über eine sekundäre Fixiereinrichtung in Form zweier in vertikaler Richtung verschiebbaren Stifte 64, welche am schachtseitigen Ende des unteren Rahmens 18 des Grundrahmens 16 angeordnet sind. In den Fig. 1 und 2 ist nur ein Stift 64 zu sehen. Die Stifte 64 können mittels nicht dargestellter Bolzen in verschiedenen Höhen fixiert werden. In Fig. 1, also in der Transportposition der Fixiereinrichtung 48 sind die Stifte 64 so angeordnet, dass sie oberhalb des Bodens 28 enden und damit eine Verlagerung der Transportvorrichtung 10 nicht behindern.

Am unteren Rahmen 18 des Grundrahmens 16 sind im Bereich seines schachtseitigen Endes zwei Abstützvorrichtungen in Form von zwei vertikal ausgerichteten Spindeln 66 angeordnet, wobei in den Fig. 1 und 2 nur eine Spindel 66 zu sehen ist. Die Spindeln 66 können durch eine entsprechende Drehung weiter oder weniger weit nach unten aus dem unteren Rahmen 18 herausragen. In der Fig. 1 sind die Spindeln 66 so angeordnet, dass sie oberhalb des Bodens 28 enden und damit eine Verlagerung der Transportvorrichtung 10 nicht behindern.

Um die Montagevorrichtung 12 mit dem Montagerahmen 11 in den Aufzugschacht 14 einzubringen, muss die Montagevorrichtung 12 auf den Auflagerahmen 34 der Transportvorrichtung 10 aufgesetzt werden. Ein erstes Aufsetzen erfolgt ausserhalb des Gebäudes, in welchem der Aufzugschacht 14 angeordnet ist. Die Montagevorrichtung 12 wird insbesondere mittels eines Krans auf den Auflagerahmen 34 aufgesetzt. Die Montagevorrichtung 12 kann dazu an einer Öse 68 aufgehängt werden. Die Öse 68 dient auch dazu, die Montagevorrichtung 12 an einem nicht dargestellten Tragmittel einer nicht dargestellten Verlagerungskomponente in Form einer Winde im Aufzugschacht 14 aufzuhängen.

Um die Montagevorrichtung 12 und damit den Montagerahmen 11 in eine vorgegebene Aufsetzposition zu bringen, weist der Auflagerahmen 34 vier Zentriervorrichtungen 70 auf, von denen in den Fig. 1 und 2 nur zwei zu sehen sind. Die Zentriervorrichtungen 70 weisen konusförmig angeordnete Einführschrägen auf, die mit entsprechenden Schrägen an nach unten orientierten Fortsätzen 72 des Montagerahmens 11 zusammenwirken. Beim Aufsetzen des Montagerahmens 11 auf den Auflagerahmen 34 gleiten die entsprechenden Schrägen aufeinander ab und bringen den Montagerahmen 11 in die vorgegebene, in den Fig. 1 und 2 dargestellte Aufsetzposition.

Die Zentriervorrichtungen 70 weisen jeweils eine Sicherungsvorrichtung 74 auf, mittels welcher der auf den Auflagerahmen 34 aufgesetzte Montagerahmen 11 am Aufnahmerahmen 34 gesichert werden kann. Die Sicherungsvorrichtung 74 weist ein nicht dargestelltes Durchgangslochs in der Zentriervorrichtung auf, welches in der vorgegebenen Aufsetzposition des Montagerahmens 11 mit einem korrespondierenden, nicht dargestellten Durchgangsloch im Fortsatz 72 des Montagerahmens 11 ausgerichtet ist. Zum Sichern des Montagerahmens 11 am Auflagerahmen 34 wird ein Sicherungsstift 76 durch die beiden Durchgangslöcher gesteckt, womit eine formschlüssige Verbindung zwischen dem Montagerahmen 11 und dem Auflagerahmen 34 hergestellt ist.

Das beschriebene Aufsetzen des Montagerahmens 11 auf den Auflagerahmen 34 kann auch nach Abschluss von Montagearbeiten in einem Aufzugschacht erfolgen. Darauf wird weiter unten noch genauer eingegangen.

Nach dem Aufsetzen des Montagerahmens 11 auf den Auflagerahmen 34 wird die Transportvorrichtung 10 inklusive des Montagerahmens 11 zur Schachtöffnung 50 des Aufzugschachts 14 verlagert. Die Transportvorrichtung 10 wird vor der Schachtöffnung 50 so angeordnet, dass die vertikalen Stifte 64 der sekundären Fixiereinrichtung gerade im Aufzugschacht 14 angeordnet sind und über den Boden 28 hinaus nach unten verschoben werden können. Diese Position ist in den Fig. 1 und 2 dargestellt.

Um die Montagevorrichtung 12 und damit den Montagerahmen 11 in den Aufzugschacht 14 einzubringen, wird die Fixiereinrichtung 48 in ihre in Fig. 2 dargestellte Fixierposition gebracht und damit der Grundrahmen 16 und die Transportvorrichtung 10 an der Schachtöffnung 50 fixiert. Dazu werden die oberen Armteile 62 von ihren Halterungen am oberen Rahmen 20 des Grundrahmens 16 abgenommen und in ihre zugehörigen unteren Armteile 60 eingesteckt. Die Länge der Fixierarme 56 wird dabei so eingestellt, dass sie die Schachtöffnung 50 ein wenig überragen. Anschliessend werden die Fixierarme 56 um ihre Schwenkachsen 58 nach oben in ihre Fixierposition verschwenkt und in dieser Position gegenüber dem unteren Rahmen 18 des Grundrahmens 16 mittels eines Bolzens 63 gesichert.

Die Fixierarme 56, speziell die oberen Armteile 62 weisen an ihrem oberen Ende jeweils eine Spindel 78 auf, die in der Fixierposition der Fixierarme 56 horizontal in Richtung Schachtwand 52 verläuft. Die Spindeln 78 sind in den Fixierarmen 56 rotierbar und verschiebbar gelagert, so dass sie durch eine entsprechende Rotation mittels einer Handkurbel 80, in Richtung Schachtwand 52 bzw. von der Schachtwand 52 weg verlagert werden können. Zum Fixieren des Grundrahmens 16 und damit der Transportvorrichtung 10 an der Schachtöffnung 50 werden die Spindeln 78 so weit in Richtung Schachtwand 52 verlagert werden, dass sie an einer Aussenseite 82 der Schachtwand 52 anliegen und sich damit an der Aussenseite 82 der Schachtwand 52 abstützen. Da wie beschrieben die Fixierarme 56 die Schachtöffnung 50 nach oben überragen, stützen sich die Spindeln 78 und damit die Fixierarme 56 oberhalb der Schachtöffnung 50 an der Aussenseite 82 der die Schachtöffnung 59 aufweisenden Schachtwand 52 ab. Dieser Zustand ist in Fig. 2 dargestellt.

Um die Fixiereinrichtung 48 in ihre Fixierposition zu bringen wird auch die sekundäre Fixiereinrichtung in Form der beiden Stifte 64 in ihre Fixierposition gebracht. Dazu werden die beiden Stifte 64 so weit nach unten geschoben, dass sie unterhalb des Bodens 28 enden. Sie liegen damit in ihrem unteren Bereich an einer Innenseite 84 der die Schachtöffnung 50 aufweisenden Schachtwand 52 an und können sich damit an der Innenseite 84 abstützen. Da die Stifte 64 unterhalb des Bodens 28 enden, stützen sich die Stifte 64 unterhalb der Schachtöffnung 50 an der Innenseite 84 der die Schachtöffnung 50 aufweisenden Schachtwand 52 ab. Dieser Zustand ist in Fig. 2 dargestellt.

Um beim Einbringen der Montagevorrichtung 12 in den Aufzugschacht 14 die Rollen 26, insbesondere die beiden schachtseitigen Rollen 26, zu entlasten, werden vor dem Einbringen die Spindeln 66 der Abstützvorrichtung so weit nach unten aus dem unteren Rahmen 18 des Grundrahmens 16 herausgedreht, dass sie sich auf dem Boden 28 abstützen und die beiden schachtseitigen Rollen 26 nicht mehr belastet werden. Dieser Zustand ist in Fig. 2 dargestellt.

Nach dem Fixieren des Grundrahmens 14 und der Transportvorrichtung 10 an der Schachtöffnung 50 werden die Sicherungsstifte 76 der Sicherungsvorrichtungen 74 entfernt (siehe Fig. 1), so dass der Montagerahmen 11 und damit die Montagevorrichtung 12 vom Auflagerahmen 34 abgehoben werden kann.

Anschliessend wird durch Drehen bzw. Rotieren der Spindel 40 des Spindelantriebs 38 der Auflagerahmen 34 und damit die Montagevorrichtung 12 mit dem Montagerahmen 11 horizontal gegenüber dem Grundrahmen 16 in Richtung Aufzugschacht 14 verschoben. Dabei werden die beiden Teleskopschienenauszüge 17, welche den Auflagerahmen 34 mit dem oberen Rahmen 20 des Grundrahmens 16 verbinden, auseinander gezogen. Damit wird der Auflagerahmen 34 mit der Montagevorrichtung 12 und dem Montagerahmen 11 von ausserhalb des Aufzugschachts 14 durch die Schachtöffnung 50 in den Aufzugschacht 14 verschoben. Die Verschiebung wird so lange fortgesetzt, bis der erste Anschlag 44 am oberen Rahmen 20 des Grundrahmens 16 in Kontakt mit dem zweiten Anschlag 46 des Auflagerahmens 34 kommt und damit die Verschiebung beendet wird. Dieser Zustand ist in Fig. 2 dargestellt.

Nachdem das Verschieben in den Aufzugsschacht 14 beendet ist, wird der Montagerahmen 11 und damit die Montagevorrichtung 12 über die Öse 68 mit einem nicht dargestellten Tragmittel einer nicht dargestellten Verlagerungskomponente in Form einer Winde im Aufzugschacht 14 verbunden. Mit der Winde und dem Tragmittel wird dann die Montagevorrichtung 12 mit dem Montagerahmen 11 vom Auflagerahmen 34 abgehoben.

Anschliessend wird der Auflagerahmen 34 wieder zurück in Richtung Grundrahmen 14 verschoben und die Fixierung 48 an der Schachtöffnung 50 gelöst. Die Transportvorrichtung 10 wird damit wieder in den in Fig. 1 dargestellten Zustand gebracht. Dann kann die Transportvorrichtung 10 von der Schachtöffnung 50 weg verlagert werden.

Die Montagevorrichtung 12 kann dann die notwendigen Montageschritte im Aufzugschacht 14 ausführen. Nach Abschluss der Montageschritte wird die Montagevorrichtung 12 wieder mittels der Transportvorrichtung 10 aus dem Aufzugschacht 14 entfernt. Dazu wird sie wieder in die in Fig. 2 dargestellte Position gebracht und die Montagevorrichtung 12 mittels der Winde und dem Tragmittel wieder auf dem Auflagerahmen 34 aufgesetzt. Anschliessend werden die im Zusammenhang mit dem Einbringen der Montagevorrichtung 12 beschriebenen Schritte in umgekehrter Reihenfolge ausgeführt.

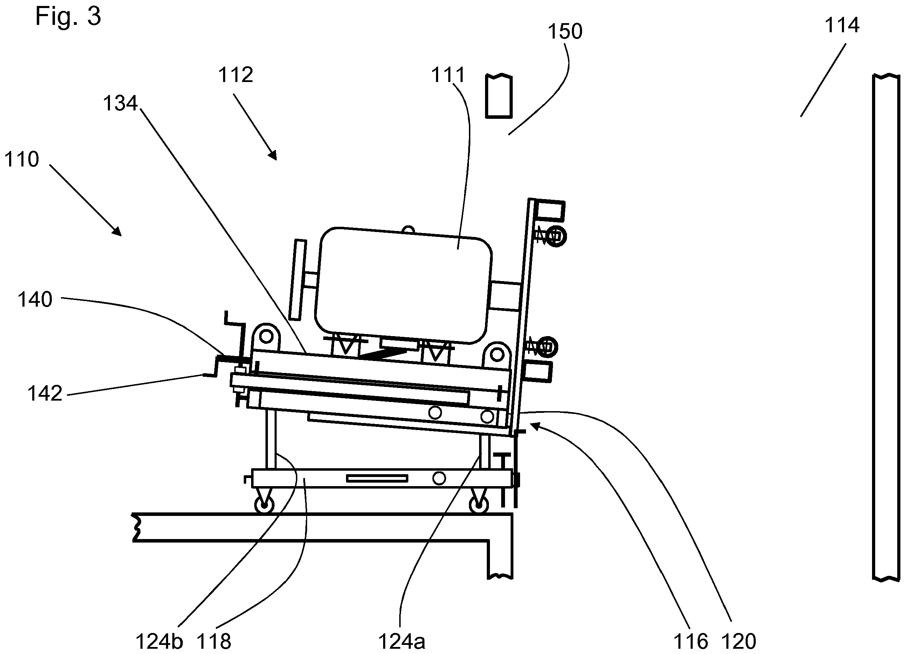

Die Fig. 3 zeigt eine alternative Ausführung einer Transportvorrichtung 110 mit aufgesetztem Montagerahmen 111 in der gleichen Position vor einer Schachtöffnung 150 eines Schachts 114 wie die Transportvorrichtung 10 in Fig. 1 vor der Schachtöffnung 50. Da sich die Transportvorrichtung 110 der Fig. 3 nur wenig von der Transportvorrichtung 10 der Fig. 1 unterscheidet, wird hier nur auf die Unterschiede der beiden Transportvorrichtungen eingegangen.

Die senkrecht verlaufenden Holme des Grundrahmens 116 der Transportvorrichtung 110, welche den unteren Rahmen 118 mit dem oberen Rahmen 120 verbinden, sind nicht gleich, sondern unterschiedlich lang. Die der Schachtöffnung 150 zugewandten Holme 124a sind kürzer als die der Schachtöffnung 150 abgewandten Holme 124b, so dass der obere Rahmen 120 des Grundrahmens 116 eine Neigung in Richtung Schachtöffnung 150 aufweist. Damit weist auch der vom oberen Rahmen 120 des Grundrahmens 116 getragene Auflagerahmen 134 eine Neigung in Richtung Schachtöffnung 150 auf.

Am oberen Rahmen 120 des Grundrahmens 116 ist eine Seilwinde 140 angeordnet, die mit einer Handkurbel 142 betätigt werden kann. Ein nicht sichtbares Seil der Seilwinde 140 ist mit dem Auflagerahmen 134 verbunden. Mit der Seilwinde 142 kann das durch die Neigung des Auflagerahmens 134 hervorgerufene selbsttätige Verschieben des Auflagerahmens 134 gegenüber dem Grundrahmen 116 verhindert oder kontrolliert werden. Nachdem die Montagevorrichtung 112 in den Schacht 114 eingebracht und am Seil der Verlagerungskomponente aufgehängt wurde, kann der Auflagerahmen 134 mittels der Seilwinde 142 wieder aus dem Schacht 114 zurückgezogen und damit wieder in Richtung Grundrahmen 116 verschoben werden.

Abschliessend ist darauf hinzuweisen, dass Begriffe wie "aufweisend", "umfassend", etc. keine anderen Elemente oder Schritte ausschließen und Begriffe wie "eine" oder "ein" keine Vielzahl ausschließen. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Mobile Transportvorrichtung zum Transportieren eines Montagerahmens und zum Einbringen des Montagerahmens in einen Schacht, insbesondere einen Aufzugschacht, mit
- einem Grundrahmen (16, 116) und
- einer am Grundrahmen (16, 116) angeordneten Fixiereinrichtung (48) zum Fixieren des Grundrahmens (16, 116) an einer Schachtöffnung (50, 150) einer Schachtwand (52) des Schachts (14, 114) und zum Verhindern eines Kippens der Transportvorrichtung (10, 110),
**gekennzeichnet durch**
- einen Auflagerahmen (34, 134), auf welchem sich der Montagerahmen (11, 111) von oben abstützen kann,
wobei der Auflagerahmen (34, 134) vom Grundrahmen (16, 116) getragen und gegenüber dem Grundrahmen (16, 116) so in horizontaler Richtung verschiebbar angeordnet ist, dass bei einem ausserhalb des Schachts (14, 114) angeordneten Grundrahmen (16, 116) der Auflagerahmen (34, 134) von ausserhalb des Schachts (14, 114) durch die Schachtöffnung (50, 150) in den Schacht (14, 114) verschiebbar ist.

2. Transportvorrichtung nach Anspruch 1,
**dadurch gekennzeichnet, dass**
der Auflagerahmen (34, 134) über einen Teleskopschienenauszug (17) am Grundrahmen (16) angeordnet ist.

3. Transportvorrichtung nach Anspruch 1 oder 2,
**dadurch gekennzeichnet, dass**
der Grundrahmen (16, 116) und der Auflagerahmen (34, 134) jeweils einen Anschlag (44, 46) aufweisen, welche so ausgeführt und angeordnet sind, dass sie ein Verschieben des Auflagerahmens (34, 134) gegenüber dem Grundrahmen (16, 116) begrenzen.

4. Transportvorrichtung nach Anspruch 1, 2 oder 3,
**dadurch gekennzeichnet, dass**
der Auflagerahmen (34) mittels eines Spindelantriebs (38) gegenüber dem Grundrahmen (16) verschiebbar ist.

5. Transportvorrichtung nach einem der Ansprüche 1 bis 4,
**dadurch gekennzeichnet, dass**
der Auflagerahmen (134) gegenüber der Horizontalen geneigt angeordnet ist.

6. Transportvorrichtung nach einem der Ansprüche 1 bis 5,
**dadurch gekennzeichnet, dass**
die Fixiereinrichtung (48) ein primäres Fixierelement (54) zum Abstützen an einer Aussenseite (82) der die Schachtöffnung (50, 150) aufweisenden Schachtwand (52) aufweist.

7. Transportvorrichtung nach Anspruch 6,
**dadurch gekennzeichnet, dass**
das primäre Fixierelement (54) einen Fixierarm (56) aufweist, welcher in einer Fixierposition und in einer Verlagerungsposition an der Transportvorrichtung (10, 110) angeordnet werden kann, wobei er in seiner Fixierposition eine Fixierung des Grundrahmens (16, 116) an der Schachtöffnung (50. 150) und in seiner Verlagerungsposition eine Verlagerung der Transportvorrichtung (10, 110) ermöglicht.

8. Transportvorrichtung nach Anspruch 7,
**dadurch gekennzeichnet, dass**
zumindest ein Teil (60) des Fixierarms (56) um eine Schwenkachse (58) schwenkbar am Grundrahmen (16, 116) angeordnet ist und durch ein Verschwenken um die genannte Schwenkachse (58) von der Fixierposition in die Verlagerungsposition und umgekehrt bringbar ist.

9. Transportvorrichtung nach einem der Ansprüche 1 bis 8,
**dadurch gekennzeichnet, dass**
die Fixiereinrichtung (48) ein sekundäres Fixierelement (64) zum Abstützen an einer Innenseite (84) der die Schachtöffnung (50, 150) aufweisenden Schachtwand (52) aufweist.

10. Transportvorrichtung nach einem der Ansprüche 1 bis 9,
**dadurch gekennzeichnet, dass**
am Grundrahmen (16, 116) Rollen (26) angeordnet sind, mittels welchen sich der Grundrahmen (16, 116) auf einem Boden (28) unterhalb des Grundrahmens (16, 116) abstützt und welche auf dem Boden (28) abrollen können.

11. Transportvorrichtung nach Anspruch 10,
**dadurch gekennzeichnet, dass**
am Grundrahmen (16, 116) eine Abstützvorrichtung (66) angeordnet ist, mittels welcher sich der Grundrahmen (16, 116) an einem Boden (28) vor der Schachtöffnung (50, 150) abstützen kann.

12. Transportvorrichtung nach einem der Ansprüche 1 bis 11,
**dadurch gekennzeichnet, dass**
der Grundrahmen (16, 116) eine Kopplungsvorrichtung (30) aufweist, welche so ausgeführt und angeordnet ist, dass eine Kopplung mit einer Antriebsvorrichtung (32) zum Verlagern der Transportvorrichtung (10, 110) herstellbar ist.

13. Transportvorrichtung nach einem der Ansprüche 1 bis 11,
**dadurch gekennzeichnet, dass**
der Auflagerahmen (34, 134) eine Zentriervorrichtung (70) aufweist, mittels welcher der Montagerahmen (11, 111) beim Aufsetzen auf den Auflagerahmen (34, 134) in eine vorgegebene Aufsetzposition geführt wird.

14. Transportvorrichtung nach Anspruch 13,
**dadurch gekennzeichnet, dass**
die Zentriervorrichtung (70) eine Sicherungsvorrichtung (74) aufweist, mittels welcher ein auf den Auflagerahmen (34, 134) aufgesetzter Montagerahmen (11, 111) am Aufnahmerahmen (34, 134) gesichert werden kann.

15. Verfahren zum Einbringen eines Montagerahmens in einen Schacht, insbesondere einen Aufzugschacht, wobei der Montagerahmen (11, 111) auf einen Auflagerahmen (34, 134) einer mobilen Transportvorrichtung (10, 110) aufgesetzt ist und sich der Montagerahmen (11, 111) von oben auf dem Auflagerahmen (34, 134) abstützt und der Auflagerahmen (34, 134) von einem Grundrahmen (16, 116) der Transportvorrichtung (10, 110) getragen wird,
und das Verfahren wenigstens folgende Schritte umfasst:
- Fixieren des Grundrahmens (16, 116) und damit der Transportvorrichtung (10, 110) mittels einer am Grundrahmen (16, 116) angeordneten Fixiereinrichtung (48) an einer Schachtöffnung (50, 150) ausserhalb des Schachts (14, 114), womit ein Kippen der Transportvorrichtung (10, 110) verhindert wird und
- Verschieben des gegenüber dem Grundrahmen (16, 116) in horizontaler Richtung verschiebbar angeordneten Auflagerahmen (34, 134) von ausserhalb des Schachts (14, 114) durch die Schachtöffnung (50, 150) in den Schacht (14, 114), womit der Montagerahmen (11, 111) von ausserhalb des Schachts (14, 114) durch die Schachtöffnung (50, 150) in den Schacht (14, 14) eingebracht wird.

## Claims

1. Mobile transport device for transporting an installation frame and for introducing an installation frame into a shaft, in particular an elevator shaft, comprising
- a base frame (16, 116) and
- a fixing device (48) which is arranged on the base frame (16, 116) for fixing the base frame (16, 116) to a shaft opening (50, 150) of a shaft wall (52) of the shaft (14, 114) and for preventing the transport device (10, 110) from tilting,
**characterized by**
- a bearing frame (34, 134) on which the installation frame (11, 111) can be supported from above,
wherein the bearing frame (34, 134) is supported by the base frame (16, 116) and is movably arranged in the horizontal direction relative to the base frame (16, 116) such that, when the base frame (16, 116) is arranged outside of the shaft (14, 114), the bearing frame (34, 134) can be moved into the shaft (14, 114) from outside the shaft (14, 114) through the shaft opening (50, 150).

2. Transport device according to claim 1,
**characterized in that**
the bearing frame (34, 134) is arranged on the base frame (16) via a telescopic extension rail (17).

3. Transport device according to either claim 1 or claim 2,
**characterized in that**
the base frame (16, 116) and the bearing frame (34, 134) each have a stop (44, 46) which is designed and arranged in such a way that it delimits movement of the bearing frame (34, 134) relative to the base frame (16, 116).

4. Transport device according to claim 1, 2, or 3,
**characterized in that**
the bearing frame (34) can be moved relative to the base frame (16) by means of a spindle drive (38).

5. Transport device according to any of claims 1 to 4,
**characterized in that**
the bearing frame (134) is arranged inclined relative to the horizontal.

6. Transport device according to any of claims 1 to 5,
**characterized in that**
the fixing device (48) has a primary fixing element (54) for support on an outside (82) of the shaft wall (52) having the shaft opening (50, 150).

7. Transport device according to claim 6,
**characterized in that**
the primary fixing element (54) has a fixing arm (56) which can be arranged in a fixing position and in a displacement position on the transport device (10, 110), wherein, in its fixing position, it allows the base frame (16, 116) to be fixed to the shaft opening (50, 150) and, in its displacement position, it allows the transport device (10, 110) to be displaced.

8. Transport device according to claim 7,
**characterized in that**
at least one part (60) of the fixing arm (56) is arranged on the base frame (16, 116) so as to be pivoted about a pivot axis (58) and can be brought from the fixing position to the displacement position and vice versa by pivoting about said pivot axis (58).

9. Transport device according to any of claims 1 to 8,
**characterized in that**
the fixing device (48) has a secondary fixing element (64) for support on an inner side (84) of the shaft wall (52) having the shaft opening (50, 150).

10. Transport device according to any of claims 1 to 9,
**characterized in that**
rollers (26) are arranged on the base frame (16, 116), by means of which rollers the base frame (16, 116) is supported on a floor (28) below the base frame (16, 116) and which can roll on the floor (28).

11. Transport device according to claim 10,
**characterized in that**
a supporting device (66) is arranged on the base frame (16, 116), by means of which supporting device the base frame (16, 116) can be supported on a floor (28) in front of the shaft opening (50, 150).

12. Transport device according to any of claims 1 to 11,
**characterized in that**
the base frame (16, 116) has a coupling device (30) which is designed and arranged in such a way that a coupling to a drive device (32) for displacing the transport device (10, 110) can be produced.

13. Transport device according to any of claims 1 to 11,
**characterized in that**
the bearing frame (34, 134) has a centering device (70) by means of which the installation frame (11, 111) is guided into a predetermined fitting position when fitting on the bearing frame (34, 134).

14. Transport device according to claim 13,
**characterized in that**
the centering device (70) has a securing device (74) by means of which an installation frame (11, 111) fitted on the bearing frame (34, 134) can be secured on the receiving frame (34, 134).

15. Method for introducing an installation frame into a shaft, in particular an elevator shaft, wherein the installation frame (11, 111) is fitted on a bearing frame (34, 134) of a mobile transport device (10, 110), and the installation frame (11, 111) is supported from above on the bearing frame (34, 134), and the bearing frame (34, 134) is supported by a base frame (16, 116) of the transport device (10, 110),
and the method comprises at least the following steps:
- fixing the base frame (16, 116) and thus the transport device (10, 110) by means of a fixing device (48) arranged on the base frame (16, 116) at a shaft opening (50, 150) outside the shaft (14, 114), whereby the transport device (10, 110) is prevented from tilting and
- moving the bearing frame (34, 134) which is movably arranged in the horizontal direction relative to the base frame (16, 116), from outside the shaft (14, 114) through the shaft opening (50, 150) into the shaft (14, 114), whereby the installation frame (11, 111) is introduced from outside the shaft (14, 114) through the shaft opening (50, 150) into the shaft (14, 14).

## Revendications

1. Dispositif de transport mobile permettant de transporter un cadre de montage et d'introduire le cadre de montage dans une cage, en particulier une cage d'ascenseur, comportant
- un cadre de base (16, 116) et
- un moyen de fixation (48) disposé sur le cadre de base (16, 116), permettant de fixer le cadre de base (16, 116) à une ouverture de cage (50, 150) d'une paroi de cage (52) de la cage (14, 114) et d'empêcher une inclinaison du dispositif de transport (10, 110),
**caractérisé par**
- un cadre d'appui (34, 134) sur lequel le cadre de montage (11, 111) peut s'appuyer depuis le haut,
dans lequel le cadre d'appui (34, 134) est porté par le cadre de base (16, 116) et est disposé coulissant en face du cadre de base (16, 116) dans la direction horizontale de telle sorte que, si le cadre de base (16, 116) est disposé à l'extérieur de la cage (14, 114), le cadre d'appui (34, 134) peut se déplacer depuis l'extérieur de la cage (14, 114) dans la cage (14, 114) à travers l'ouverture de cage (50, 150).

2. Dispositif de transport selon la revendication 1,
**caractérisé en ce que**
le cadre d'appui (34, 134) est disposé sur le cadre de base (16) par le biais d'une extension télescopique de rail (17).

3. Dispositif de transport selon la revendication 1 ou 2,
**caractérisé en ce que**
le cadre de base (16, 116) et le cadre d'appui (34, 134) présentent chacun une butée (44, 46), les butées étant conçues et disposées de manière à limiter un déplacement du cadre d'appui (34, 134) par rapport au cadre de base (16, 116).

4. Dispositif de transport selon la revendication 1, 2 ou 3,
**caractérisé en ce que**
le cadre d'appui (34) peut se déplacer par rapport au cadre de base (16) par l'intermédiaire d'un entraînement à broche (38).

5. Dispositif de transport selon l'une des revendications 1 à 4,
**caractérisé en ce que**
le cadre d'appui (134) est disposé incliné par rapport à l'horizontale.

6. Dispositif de transport selon l'une des revendications 1 à 5,
**caractérisé en ce que**
le moyen de fixation (48) présente un élément de fixation (54) primaire destiné à assurer un appui sur une face extérieure (82) de la paroi de cage (52) présentant l'ouverture de cage (50, 150).

7. Dispositif de transport selon la revendication 6,
**caractérisé en ce que**
l'élément de fixation (54) primaire présente un bras de fixation (56) qui peut être disposé sur le dispositif de transport (10, 110) dans une position de fixation et dans une position de déplacement, dans lequel, dans sa position de fixation, il permet une fixation du cadre de base (16, 116) au niveau de l'ouverture de cage (50, 150) et il permet, dans sa position de déplacement, un déplacement du dispositif de transport (10, 110).

8. Dispositif de transport selon la revendication 7,
**caractérisé en ce que**
au moins une partie (60) du bras de fixation (56) est disposée pivotant sur le cadre de base (16, 116), autour d'un axe de pivotement (58), et peut être amenée, par pivotement autour dudit axe de pivotement (58), de la position de fixation à la position de déplacement, et inversement.

9. Dispositif de transport selon l'une des revendications 1 à 8,
**caractérisé en ce que**
le moyen de fixation (48) présente un élément de fixation (64) secondaire destiné à assurer un appui sur une face intérieure (84) de la paroi de cage (52) présentant l'ouverture de cage (50, 150).

10. Dispositif de transport selon l'une des revendications 1 à 9,
**caractérisé en ce que**
des roulettes (26) sont disposées sur le cadre de base (16, 116), lesquelles roulettes permettent au cadre de base (16, 116) de s'appuyer sur un sol (28) en dessous du cadre de base (16, 116) et peuvent rouler sur ledit sol (28).

11. Dispositif de transport selon la revendication 10,
**caractérisé en ce que**
un dispositif d'appui (66) est disposé sur le cadre de base (16, 116), lequel dispositif d'appui permet au cadre de base (16, 116) de s'appuyer sur un sol (28) avant l'ouverture de cage (50, 150).

12. Dispositif de transport selon l'une des revendications 1 à 11,
**caractérisé en ce que**
la cadre de base (16, 116) présente un dispositif d'accouplement (30) conçu et disposé de telle sorte qu'un accouplement peut être réalisé avec un dispositif d'entraînement (32) pour le déplacement du dispositif de transport (10, 110).

13. Dispositif de transport selon l'une des revendications 1 à 11,
**caractérisé en ce que**
le cadre d'appui (34, 134) présente un dispositif de centrage (70) au moyen duquel le cadre de montage (11, 111) est guidé dans une position de placement prédéfinie lorsqu'il est mis en place sur le cadre d'appui (34, 134).

14. Dispositif de transport selon la revendication 13,
**caractérisé en ce que**
le dispositif de centrage (70) présente un dispositif de sécurisation (74) au moyen duquel un cadre de montage (11, 111) mis en place sur le cadre d'appui (34, 134) peut être sécurisé sur le cadre d'appui (34, 134).

15. Procédé de mise en place d'un cadre de montage dans une cage, en particulier une cage d'ascenseur, dans lequel le cadre de montage (11, 111) est mis en place sur un cadre d'appui (34, 134) d'un dispositif de transport (10, 110) mobile et le cadre de montage (11, 111) s'appuie depuis le haut sur le cadre d'appui (34, 134) et le cadre d'appui (34, 134) est porté par un cadre de base (16, 116) du dispositif de transport (10, 110),
et le procédé comprend au moins les étapes suivantes :
- fixation du cadre de base (16, 116) et donc du dispositif de transport (10, 110) à l'aide d'un moyen de fixation (48) disposé sur le cadre de base (16, 116) au niveau d'une ouverture de cage (50, 150) à l'extérieur de la cage (14, 114), ce qui empêche une inclinaison du dispositif de transport (10, 110) et
- déplacement du cadre d'appui (34, 134) disposé coulissant en direction horizontale en face du cadre de base (16, 116), de l'extérieur de la cage (14, 114) dans la cage (14, 114) à travers l'ouverture de cage (50, 150), ce qui permet la mise en place du cadre de montage (11, 111) de l'extérieur de la cage (14, 14) dans la cage (14, 114) à travers l'ouverture de cage (50, 150).
